# EUROPEAN PATENT APPLICATION

(11) **EP 2 378 398 A2**
(43) Date of publication of application: **19.10.2011**
(21) Application number: 11162270.0
(22) Date of filing: 13.04.2011
(51) Int. Cl.: G06F 3/033

(54) **Movable touch module and electronic device using the same**

(30) Priority: 15.04.2010 CN 201010148132
(71) Applicant: Protek (Shanghai) Limited, Pudong Kangqiao Industrial Zone Shanghai (CN); Pegatron Corporation, Taipei City 112 (TW)
(72) Inventor: Cheng, Xue-Bing, Pudong Kangqiao Industrial Zone Shanghai (CN); Hung, Shih-Wei, 112, Beitou District Taipei City (TW)
(74) Representative: 2K Patentanwälte Blasberg Kewitz & Reichel

(57) **Abstract**

A movable touch module (12) and an electronic device using the same are disclosed. The movable touch module (12) is disposed at a main body and includes a movable element (122), a touch unit (120), a plurality of elastic units (124), a four-direction sensing element (126), and at least two rotation sensing elements (128). The movable element (122) is disposed at the main body and is movable relative to the main body on a plane. The movable element (122) has a first containing area. The touch unit (120) is fastened to the movable element. The elastic units (124) are disposed at the main body and are against the periphery of the movable element. The four-direction sensing element (126) and the rotation sensing elements (128) are fastened to the main body and are located in the first containing area of the movable element.

## Description

### BACKGROUND OF THE INVENTION

### FIELD OF INVENTION

This invention relates to an input device and, more particularly, to a movable touch module and an electronic device using the same.

### RELATED ART

With development of science, electronic devices, such as a notebook computer, a mobile communication device, and a media player, have been necessary equipment in people's daily life. In addition, with gradual development of a market, besides functionality of the electronic devices, designs and shapes of the devices are main factors affecting purchase of consumers.

A notebook computer is taken for example. At present, the notebook computer usually has a touchpad to replace a mouse. However, the present touchpad is usually fastened to a main body of the notebook computer, which fails to provide a novel design to show individual styles and also fails to provide intuitive operation such as moving or rotating for users. In addition, when a screen of a notebook computer is not large enough, the users usually need to move a web page upward, downward, leftward, or rightward for complete browse. However, the present touchpad fails to conveniently achieve the above operation.

### SUMMARY OF THE INVENTION

This invention provides a movable touch module and an electronic device using the same to improve the prior art.

This invention provides a movable touch module disposed at the main body. The movable touch module includes a movable element, a touch unit, a plurality of elastic units, a four-direction sensing element, and at least two rotation sensing elements. The movable element is disposed at the main body and is movable relative to the main body on a plane. The movable element has a first containing area. The touch unit is fastened to the movable element. The elastic units are disposed at the main body and are against the movable element. The four-direction sensing element is fastened to the main body and is located in the first containing area of the movable element. The rotation sensing elements are fastened to the main body and are located in the first containing area of the movable element. When the movable element moves along a direction on the plane, the movable element correspondingly triggers the four-direction sensing element along the direction. When the movable element rotates on the plane, the movable element correspondingly triggers one of the rotation sensing elements.

This invention further provides an electronic device including a main body and a movable touch module. The movable touch module is disposed at the main body and includes a movable element, a touch unit, a plurality of elastic units, a four-direction sensing element, and at least two rotation sensing elements. The movable element is disposed at the main body and is movable relative to the main body on a plane. The movable element has a first containing area. The touch unit is fastened to the movable element. The elastic units are disposed at the main body and are against the periphery of the movable element. The four-direction sensing element is fastened to the main body and is located in the first containing area of the movable element. The rotation sensing elements are fastened to the main body and are located in the first containing area of the movable element. When the movable element moves along a direction on the plane, the movable element correspondingly triggers the four-direction sensing element along the direction. When the movable element rotates on the plane, the movable element correspondingly triggers one of the rotation sensing elements.

In the invention, the movable element of the movable touch module is movable relative to the main body on a plane. Further, the touch unit is fastened to the movable element. Thereby, a user can operate the touch unit to allow the movable element to move along the plane or rotate on the plane to trigger the four-direction sensing element along different directions or to trigger different rotation sensing elements, thus to achieve different functions. Thus, the movable touch module and the electronic device using the same in the invention provide a novel design and a convenient and efficient operating mode.

These and other features, aspects, and advantages of the present invention will become better understood with regard to the following description, appended claims, and accompanying drawings.

### BRIEF DESCRIPTION OF THE DRAWINGS

FIG. 1 is a schematic diagram showing an electronic device according to one preferred embodiment of this invention;

FIG. 2 is a partial exploded diagram showing an electronic device according to one preferred embodiment of the invention;

FIG. 3 is a partial exploded diagram showing a movable touch module according to one preferred embodiment of the invention;

FIG. 4 is a partial sectional diagram showing a movable touch module according to one preferred embodiment of the invention; and

FIG. 5A to FIG. 5C are schematic diagrams showing operation of a movable touch module according to one preferred embodiment of the invention.

### DETAILED DESCRIPTION OF THE INVENTION

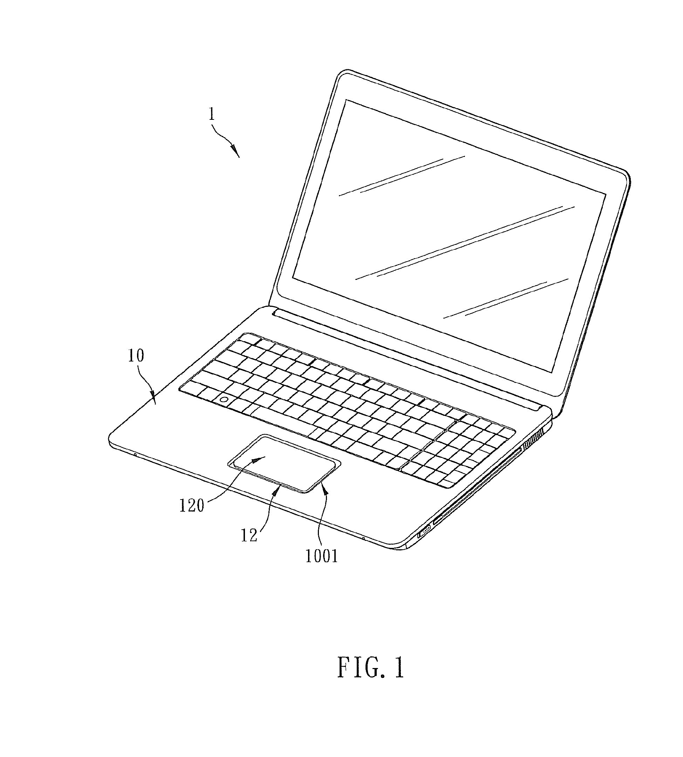

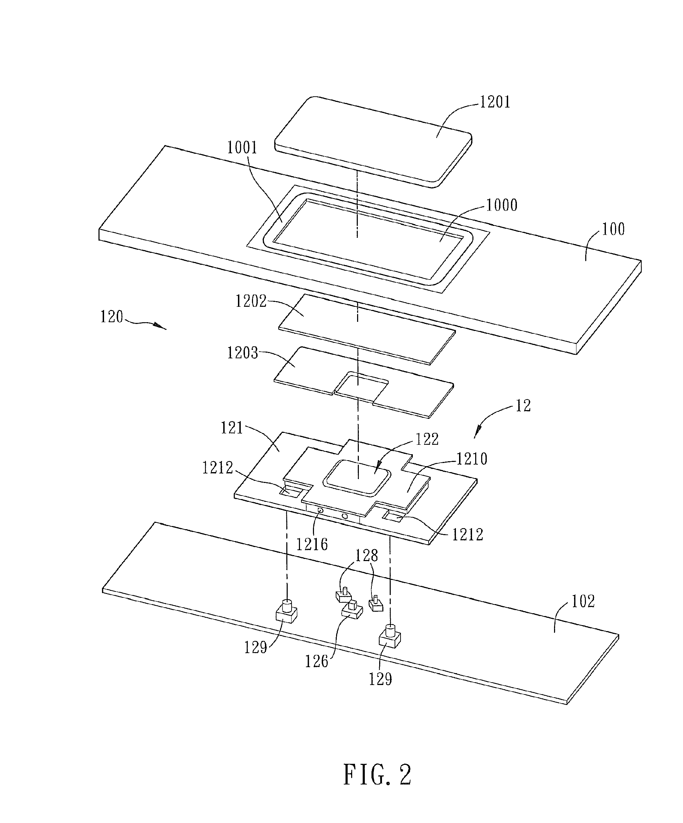

FIG. 1 is a schematic diagram showing an electronic device according to one preferred embodiment of the invention. FIG. 2 is a partial exploded diagram showing an electronic device according to one preferred embodiment of the invention. In FIG. 1 and FIG. 2, in the embodiment, an electronic device 1 includes a main body 10 and a movable touch module 12.

In the embodiment, the electronic device 1 is a notebook computer. However, the invention is not limited thereto. In other embodiments, the electronic device 1 may also be other electronic devices such as a mobile communication device or a media player.

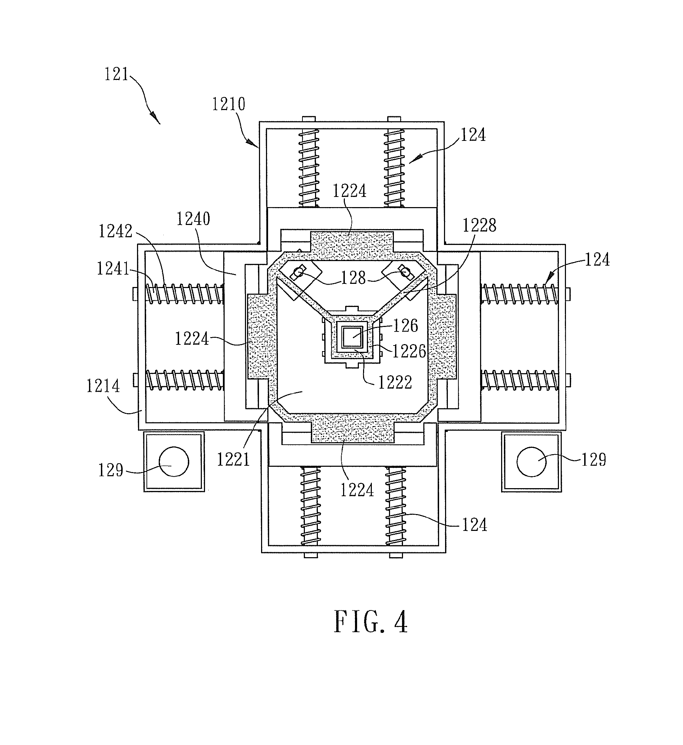

In the embodiment, the movable touch module 12 is disposed at the main body 10. The main body 10 includes a casing 100 and a circuit board 102. The circuit board 102 is disposed in the casing 100. The movable touch module 12 includes a touch unit 120, a frame 121, a movable element 122, a plurality of elastic units 124 (as shown in FIG. 4), a four-direction sensing element 126, at least two rotation sensing elements 128, and two pressing switches 129.

In the embodiment, the movable element 122 is disposed at the main body 10 and is movable relative to the main body 10 on a plane. In the embodiment, the plane is a plane where the circuit board 102 is disposed. However, the invention is not limited thereto. In a practical application, the plane where the movable element 122 is movable relative to the main body 10 can be set according to needs.

In the embodiment, the touch unit 120 is fastened to the movable element 122. The frame 121 is disposed at the main body 10 and is located between the touch unit 120 and the movable element 122. The movable element 122 is located between the touch unit 120 and the circuit board 102. The elastic units 124 (as shown in FIG. 4) are disposed in the frame 121 and are against the periphery of the movable element 122. The four-direction sensing element 126, the rotation sensing elements 128, and the pressing switches 129 are fastened to the circuit board 102 of the main body 10.

In the embodiment, the casing 100 of the main body 10 is a casing of a notebook computer. The touch unit 120 is disposed at the casing 100. In detail, in FIG. 2, the casing 100 has an opening 1000 and a decoration element 1001 at the top. The touch unit 120 is disposed at the opening 1000, and a back surface of the touch unit 120 can be exposed to the opening 1000 to be fastened to the movable element 122. The decoration element 1001 surrounds the opening 1000 to shield gaps between the touch unit 120 and the casing 100. The bottom edges of the touch unit 120 can be against the decoration element 1001. Further, the plane where the decoration element 1001 is disposed can be parallel to the plane where the movable element 122 is movable relative to the main body 10. Thereby, the touch unit 120 can move along the plane where the decoration element 1001 of the casing 100 is disposed or rotate on the plane. However, the invention is not limited thereto. In addition, in the embodiment, the opening 1000 is rectangular, and the decoration element 1001 is a rectangular frame. However, the invention does not limit the shapes of the opening 1000 and the decoration element 1001.

In addition, in a practical application, the casing 1000 may be made of plastic, and the decoration element 1001 may be made of metal, further to enhance the whole aesthetics of the electronic device 1. However, the invention is not limited thereto.

In the embodiment, an assembling direction of the touch unit 120, the frame 121, the movable element 122, the elastic units 124, and the circuit board 102 is vertical to the plane where the circuit board 102 is disposed. In detail, the circuit board 102 is disposed in the casing 100 and is located under the opening 1000. The frame 121 is located under the opening 1000 of the casing 100. The frame 121, the movable element 122, and the elastic units 124 are located on the circuit board 102. In addition, the circuit board 102 may be fastened to the bottom of the casing 100 via screws (not shown in FIG. 2). The four-direction sensing element 126, the rotation sensing elements 128, and the pressing switches 129 may be fastened to the circuit board 102 via surface mount technology (SMT).

In the embodiment, the plane where the decoration element 1001 of the casing 100 is disposed can be parallel to the plane where the circuit board 102 is disposed. Therefore, when the touch unit 120 moves upward or downward along the plane where the decoration element 1001 is disposed or rotates on the plane where the decoration element 1001 is disposed, the movable element 122 can also move upward or downward along the plane where the circuit board 102 is disposed or rotate on the plane where the circuit board 102 is disposed. However, the invention is not limited thereto.

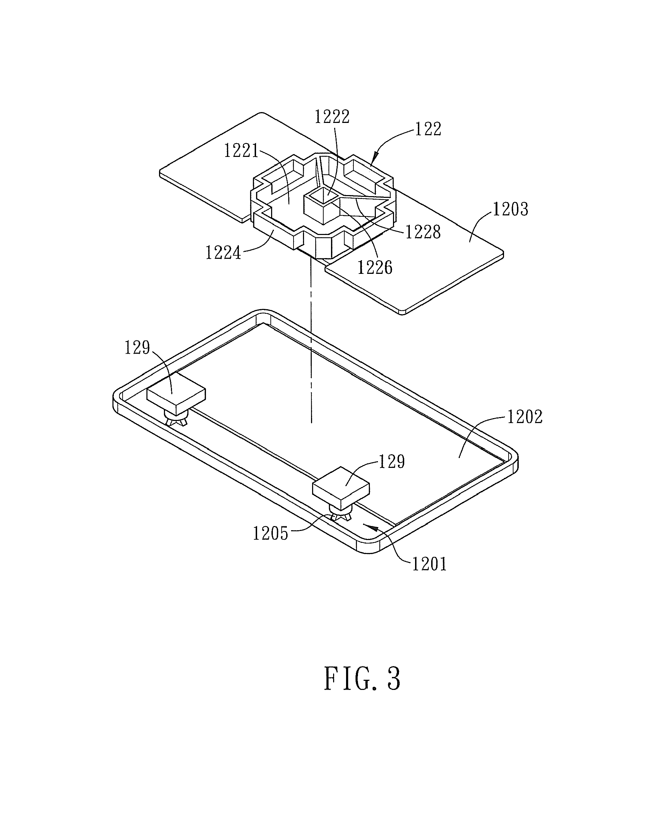

A detailed structure of the movable touch module 12 is described hereinbelow. FIG. 3 is a partial exploded diagram showing a movable touch module according to one preferred embodiment of the invention. FIG. 4 is a partial sectional diagram showing a movable touch module according to one preferred embodiment of the invention. Please refer to FIG. 2, FIG. 3, and FIG. 4.

In the embodiment, the touch unit 120 is rectangular. However, the invention is not limited thereto. In a practical application, the touch unit with different shapes (such as a circle or an ellipse) can be set according to needs.

In the embodiment, in FIG. 2, the touch unit 120 includes a touch appearance element 1201, a touch pad 1202, and a bracket 1203. The touch appearance element 1201 is fastened to the touch pad 1202. The touch pad 1202 is fastened to the bracket 1203. The bracket 1203 is disposed at the opening 1000 of the casing 100 and is fastened to the movable element 122. The touch appearance element 1201 may be a touch film, and the touch pad 1202 may be an electronic sensing plate. In addition, the touch pad 1202 can be connected with a circuit board or a motherboard of the main body 10 via a flexible flat cable (FFC), to realize the functions of a conventional touchpad. For example, the touch pad 1202 may sense movement of fingers of a user on the touch appearance element 1201 to control movement of a cursor on a screen.

In the embodiment, the touch unit 120 is fastened to the movable element 122 via the bracket 1203. In detail, a back surface of the bracket 1203 can be attached to the top of the movable element 122 to achieve fixedness therebetween. However, the invention is not limited thereto. In other embodiments, the bracket 1203 may have a recessed portion, and the movable element 122 may have a protrudent portion at the top. The protrudent portion may be fastened to the recessed portion to fasten the bracket 1203 and the movable element 122.

In the embodiment, the frame 121 can be fastened to the circuit board 102 or the casing 100. However, the invention is not limited thereto. In other embodiments, the frame 121 may be integrally formed with the casing 100.

In detail, in the embodiment, in FIG. 2, the frame 121 is rectangular and has a containing potion 1210 and two openings 1212. The openings 1212 are located at two sides of the containing portion 1210. The containing portion 1210 is a crosswise dodecagon. The movable element 122 is disposed at the center of the containing portion 1210, and the elastic units 124 are disposed at four corners of the containing portion 1210.

In the embodiment, the two pressing switches 129 on the circuit board 102 are protrudent from the two openings 1212 of the frame 121, respectively. Further, the touch unit 120 covers the pressing switches 129. Thereby, a user can press a corresponding place of the touch appearance element 1201 of the touch unit 120 to trigger the corresponding pressing switch 129. For example, in FIG. 3, the touch appearance element 1201 of the touch unit 120 has protrudent points 1205 at the back surface for triggering the pressing switches 129. However, the invention does not limit the positions of the pressing switches 129. In addition, the two pressing switches 129 are equivalent to left and right buttons around a touch area of a conventional notebook computer. In other words, the movable touch module 12 in the embodiment has a left and right button function.

In the embodiment, to clearly show the structure of the movable element 122, in FIG. 3, the back surface of the movable element 122 is shown. To clearly show interior of the containing portion 1210 of the frame 121 and position relation between the movable element 122 and the four-direction sensing element 126 and the rotation sensing elements 128, in FIG. 4, the top of the containing portion 1210 of the frame 121 and the top of the movable element 122 are not shown.

Please refer to FIG. 3 and FIG. 4. In the embodiment, the movable element 122 has a first containing area 1221, a second containing area 1222, four movement triggering portions 1226, and two rotation triggering portions 1228. The first containing area 1221 is surrounded by a plurality of side walls 1224. The second containing area 1222 is located in the center of the first containing area 1221 and is surrounded by the four movement triggering portions 1226. In the embodiment, the first containing area 1221 and the second containing area 1222 are rectangular. However, the invention is not limited thereto. In other embodiments, the first containing area 1221 and the second containing area 1222 may have other shapes (such as a circle or an ellipse).

In the embodiment, the two rotation triggering portions 1228 are located in the first containing area 1221 and are located out of the second containing area 1222. In detail, the two rotation triggering portions 1228 are formed by connecting the corresponding movement triggering portions 1226 and the side walls 1224 along diagonal lines of the first containing area 1221. The two rotation triggering portions 1228 are located above the second containing area 1222 and are opposite to each other. However, the invention is not limited thereto. In other embodiments, there may be four rotation triggering portions. In addition, the invention does not limit the positions of the movement triggering portions 1226 and the rotation triggering portions 1228.

In the embodiment, the four-direction sensing element 126 is located in the second containing area 1222 of the movable element 122. That is, the four movement triggering portions 1226 of the movable element 122 surround the four-direction sensing element 126.

In the embodiment, the two rotation sensing elements 128 are located in the first containing area 1221 of the movable element 122 and are located at one side of the rotation triggering portions 1228 of the movable element 122, respectively. In detail, in the embodiment, the two rotation sensing elements 128 are located in an area surrounded by the two rotation triggering portions 1228, one side wall 1224 of the movable element 122, and one movement triggering portion 1226. However, the invention does not limit the number of the rotation sensing elements 1228.

In addition, the invention does not limit the positions of the four-direction sensing element 126 and the rotation sensing elements 128, as long as they are located at a moving or rotating path of the movable element 122.

In the embodiment, the four-direction sensing element 126 is preferably a four-direction toggle switch. The rotation sensing elements 128 are preferably toggle switches. However, the invention is not limited thereto. In other embodiments, different types of the switches can be set according to needs.

In the embodiment, in FIG. 4, the number of the elastic units 124 is four, and the elastic units 124 are located at four corners of the containing portion 1210 of the frame 121, respectively. The elastic units 124 are against the movable element 122 and the side walls 1214 of the containing portion 1210 for restoring the movable element 122. Each of the elastic units 124 includes a sliding block 1240 and two springs 1242. However, the invention does not limit the number of the spring 1242. In addition, in other embodiments, the elastic unit 124 may be other elastic structures such as elastic sheets.

In the embodiment, in detail, in FIG. 4, one end of the respective sliding block 1240 is against the side wall 1224 of the movable element 122, and the other end has two rods 1241. One end of each rod 1241 passes through a respective hole 1216 (as shown in FIG. 2) of the side wall 1214 of the containing portion 1210. In addition, the two springs 1242 are sleeved on the rods 1241 of the sliding block 1240, respectively. Thus, two ends of each spring 1242 are against the sliding block 1240 and the side wall 1214 of the containing portion 1210, respectively. Detailed operation of the movable touch module 12 is described hereinbelow.

In the embodiment, in FIG. 4, the movable element 122 is at an initial position (i.e., the touch unit 120 does not move). At that moment, the movement triggering portions 1226 of the movable element 122 do not contact the four-direction sensing element 126, and the rotation triggering portions 1228 do not contact the rotation sensing elements 128. The springs 1242 of the elastic units 124 are in a predetermined pressed state to keep balance of the movable element 122.

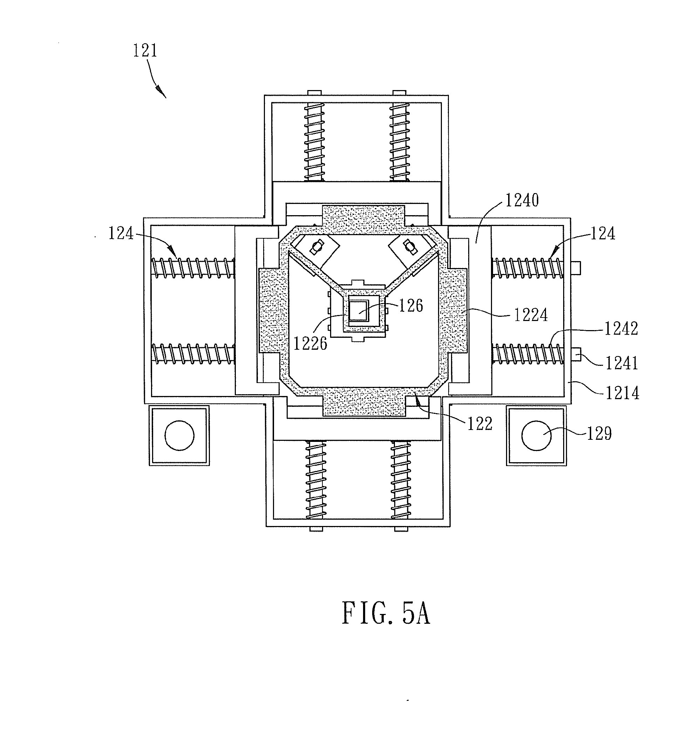

FIG. 5A to FIG. 5C are schematic diagrams showing operation of a movable touch module according to one embodiment of the invention. Please refer to FIG. 2, FIG. 4, FIG. 5A, FIG. 5B, and FIG. 5C. To clearly show the operation of the movable touch module 12, the top of the containing portion 1210 of the frame 121 and the top of the movable element 122 are not shown in FIG 5A to FIG. 5C.

In the embodiment, when a user operates the touch unit 120 to move upward, downward, leftward, or rightward along the plane where the decoration element 1001 of the casing 100 is disposed or to rotate on the plane where the decoration element 1001 is disposed, since the touch unit 120 is fastened to the movable element 122, the movable element 122 can move upward, downward, leftward, or rightward relative to the main body 10 along the plane where the circuit board 102 is disposed or rotate on the plane where the circuit board 102 is disposed.

In detail, when the user operates the touch unit 120 to move rightward along the plane where the decoration element 1001 of the casing 100 is disposed, in FIG. 5A, the movable element 122 can move rightward along the plane where the circuit board 102 is disposed, and the movement triggering portion 1226 at a left side of the four-direction sensing element 126 can contact and trigger the four-direction sensing element 126 rightward, further to control the electronic device to perform a corresponding operation (such as moving a picture rightward or turning a web page rightward). At that moment, the right side wall 1224 of the movable element 122 can push the right elastic unit 124. When the sliding block 1240 of the elastic unit 124 is pushed rightward, the rods 1241 of the sliding block 1240 can pass through the holes 1216 (as shown in FIG. 2) of the side wall 1214 of the containing portion 1210, further to compress the springs 1242. Afterwards, when the user releases the touch unit 120, the elastic unit 124 at the right side of the movable element 122 can push the movable element 122 back to the initial position via restoring force of the springs 1242. In addition, since the springs 1242 of the elastic unit 124 at the left side of the movable element 122 also have certain elastic force, the movable element 122 can be prevented from deviating the initial position due to push of the right elastic unit 124.

For example, in a practical application, when a screen of a notebook computer is not large enough, the user can move the touch unit 120 rightward to control the current web page on the screen to move rightward correspondingly. When the user releases the touch unit 120, the web page stops moving, and the screen displays the corresponding portion of the web page. Thus, the user can conveniently browse the web page just by moving the touch unit 120 along different directions.

In addition, in the embodiment, when the user operates the touch unit 120 to move leftward along the plane where the decoration element 1001 of the casing 100 is disposed, the movable element 122 can move rightward along the plane where the circuit board 102 is disposed, and the movement triggering portion 1226 located at a right side of the four-direction sensing element 126 can contact and trigger the four-direction sensing element 126 leftward, further to control the electronic device to perform a corresponding operation (such as moving a picture leftward or turning a web page leftward). At that moment, the left side wall 1224 of the movable element 122 can push the left elastic unit 124. Afterwards, when the user releases the touch unit 120, the elastic unit 124 at the left side of the movable element 122 can push the movable element 122 back to the initial position via the restoring force of the springs 1242.

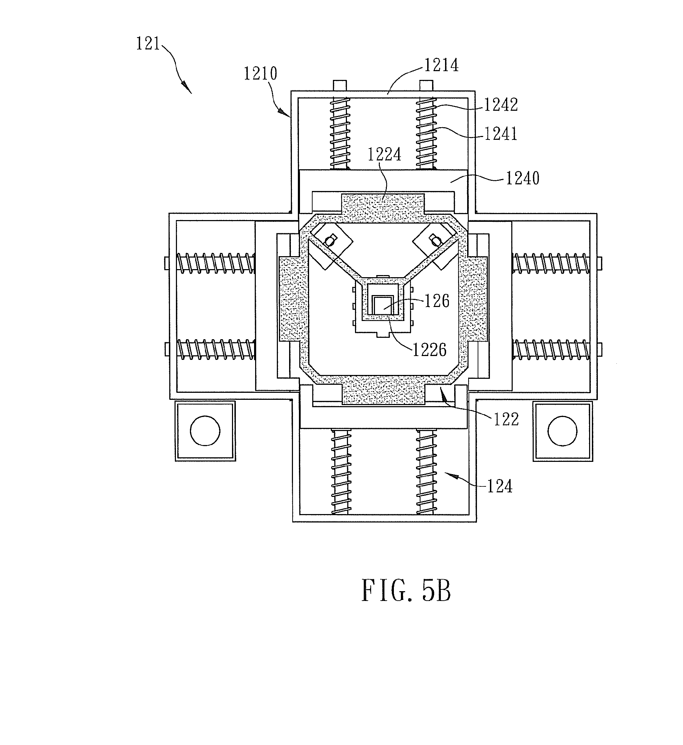

In the embodiment, when the user operates the touch unit 120 to move upward along the plane where the decoration element 1001 of the casing 100 is disposed, in FIG. 5B, the movable element 122 can move upward along the plane where the circuit board 102 is disposed, and the movement triggering portion 1226 located at a low side of the four-direction sensing element 126 can contact and trigger the four-direction sensing element 126 upward, further to control the electronic device to perform a corresponding operation (such as moving a picture upward or turning up volume). At that moment, the upper side wall 1224 of the movable element 122 can push the upper elastic unit 124. When the sliding block 1240 of the elastic unit 124 is pushed upward, the rods 1241 of the sliding block 1240 can pass through the holes 1216 (as shown in FIG. 2) of the side wall 1214 of the containing portion 1210, further to compress the springs 1242. Afterwards, when the user releases the touch unit 120, the elastic unit 124 at the upper side of the movable element 122 can push the movable element 122 back to the initial position via the restoring force of the springs 1242. In addition, since the springs 1242 of the elastic unit 124 at the lower side of the movable element 122 also have elastic force, the movable element 122 can be prevented from deviating the initial position due to push of the upper side elastic unit 124.

In addition, in the embodiment, when the user operates the touch unit 120 to move downward along the plane where the decoration element 1001 of the casing 100 is disposed, the movable element 122 can move downward along the plane where the circuit board 102 is disposed, and the movement triggering portion 1226 located at an upper side of the four-direction sensing element 126 can contact and trigger the four-direction sensing element 126 downward, further to control the electronic device to perform a corresponding operation (such as moving a picture downward or turning down volume). At that moment, the lower side wall 1224 of the movable element 122 can push the lower elastic unit 124. Afterwards, when the user releases the touch unit 120, the elastic unit at the lower side of the movable element 122 can push the movable element 122 back to the initial position via the restoring force of the springs 1242.

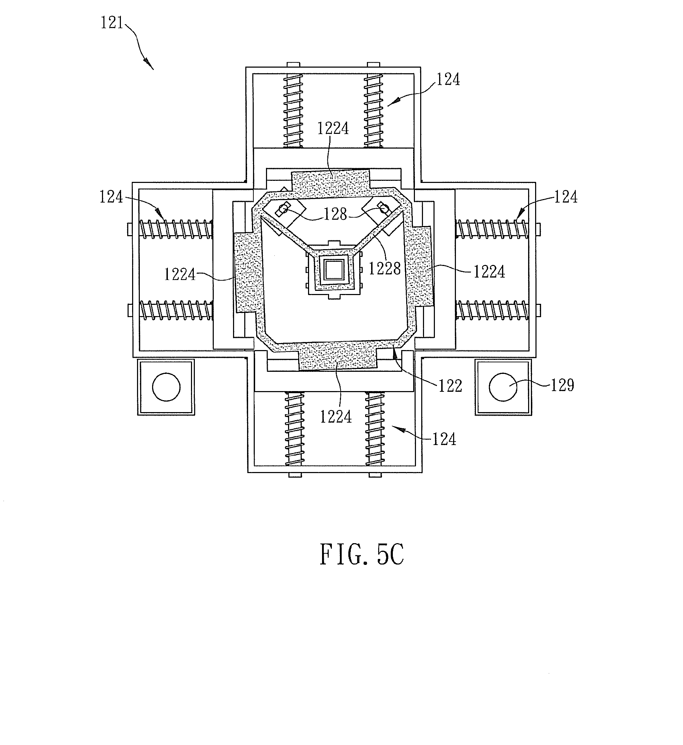

In the embodiment, when the user operates the touch unit 120 to rotate counter-clockwise on the plane where the decoration element 1001 of the casing 100 is disposed, in FIG. 5C, the movable element 122 can rotate counter-clockwise on the plane where the circuit board 102 is disposed, and the right rotation triggering portion 1228 of the movable element 122 can contact and trigger the rotation sensing element 128 at the right side, further to control the electronic device to perform a corresponding operation (such as rotating a picture counter-clockwise or stopping a certain program). At that moment, the side walls 1224 of the movable element 122 can push the surrounding elastic units 124 at the same time. When the sliding blocks 1240 of the four elastic units 124 are pushed, the rods 1241 of the sliding blocks 1240 can pass through the holes 1216 (as shown in FIG. 2) of the side walls 1214 of the containing portion 1210, further to compress the springs 1242. At that moment, the eight springs 1242 are compressed together. Afterwards, when the user releases the touch unit 120, the four elastic units 124 can push the movable element 122 back to the initial position via the restoring force of the springs 1242. In addition, since the elastic units 124 are against the periphery of the movable element 122, the movable element 122 can be ensured to be back to the initial position.

In addition, in the embodiment, when the user operates the touch unit 120 to rotate clockwise on the plane where the decoration element 1001 of the casing 100 is disposed, the movable element 122 can rotate clockwise on the plane where the circuit board 102 is disposed, and the left rotation triggering portion 1228 of the movable element 122 can contact and trigger the rotation sensing element 128 at the left side, further to control the electronic device to perform a corresponding operation (such as rotating a picture clockwise or starting a certain program). At that moment, the side walls 1224 of the movable element 122 can push the surrounding elastic units 124 together. That is, the eight springs 1242 are compressed together. Afterwards, when the user releases the touch unit 120, the four elastic units 124 can push the movable element 122 back to the initial position via the elastic force of the springs 1242.

In addition, in the embodiment, since the four-direction sensing element 126 is a four-direction toggle switch, and the rotation sensing elements 128 are toggle switches, after the four-direction sensing element 126 or the rotation sensing elements 128 are triggered, the four-direction sensing element 126 or the rotation sensing elements 128 can be restored by itself or themselves.

In addition, in the embodiment, the movable touch module 12 also has a left and right button function. In FIG. 5A, the user can press the touch unit 120 to trigger the covered pressing switches 129. The touch unit 120 can be back to the initial position via the elastic force of the pressing switches 129.

To sum up, the movable element of the movable touch module in the embodiment is movable relative to the main body on a plane. Further, the touch unit is fastened to the movable element. Thereby, the user can operate the touch unit to allow the movable element to move along the plane or rotate on the plane thus to trigger the four-direction sensing element along different directions or trigger different rotation sensing elements, thereby achieving different functions. In addition, the movable touch module in the embodiment also has a left and right button function. Thus, the movable touch module and the electronic device using the same in the embodiment can provide a novel design and a convenient and efficient operating mode.

Although the present invention has been described in considerable detail with reference to certain preferred embodiments thereof, the disclosure is not for limiting the scope of the invention. Persons having ordinary skill in the art may make various modifications and changes without departing from the scope and spirit of the invention. Therefore, the scope of the appended claims should not be limited to the description of the preferred embodiments described above.

## Claims

1. A movable touch module (12) disposed at a main body (10), the movable touch module comprising:
a movable element (122) disposed at the main body and being movable relative to the main body on a plane, the movable element having a first containing area;
a touch unit (120) fastened to the movable element;
a plurality of elastic units (124) disposed at the main body and being against the periphery of the movable element;
a four-direction sensing element (126) fastened to the main body and located in the first containing area of the movable element; and
at least two rotation sensing elements (128) fastened to the main body and located in the first containing area of the movable element,
wherein when the movable element (122) moves along a direction on the plane, the movable element correspondingly triggers the four-direction sensing element (126) along the direction, and when the movable element (122) rotates on the plane, the movable element correspondingly triggers one of the rotation sensing elements.

2. The movable touch module (12) according to claim 1, wherein the main body (10) comprises a circuit board and a casing, the circuit board is disposed in the casing, the casing has an opening, the touch unit (120) is disposed at the opening, the movable element (122) is located between the touch unit and the circuit board, and the elastic units, the four-direction sensing element, and the rotation sensing elements (128) are fastened to the circuit board.

3. The movable touch module (12) according to claim 1 or 2, wherein the movable touch module further comprises two pressing switches fastened to the main body, and the touch unit (120) covers the pressing switches.

4. The movable touch module (12) according to one of the preceding claims, wherein the movable touch module further comprises a frame located between the touch unit and the movable element, the movable element and the elastic units are disposed in the frame, and the elastic units are against the movable element and inner walls of the frame.

5. The movable touch module (12) according to one of the preceding claims, wherein the touch unit (120) comprises a touch pad and a bracket, the touch pad is fastened to the bracket, and the bracket is fastened to the movable element.

6. The movable touch module (12) according to one of the preceding claims, wherein each of the elastic units (124) comprises at least one spring and a sliding block, one end of the sliding block is against the movable element, and the spring is sleeved on the other end of the sliding block.

7. The movable touch module (12) according to one of the preceding claims, wherein the movable element (122) further has four movement triggering portions, the movement triggering portions are disposed in the first containing area and form a second containing area, and the four-direction sensing element is located in the second containing area.

8. The movable touch module (12) according to claim 7, wherein the movable element (122) further has two rotation triggering portions located out of the second containing area.

9. An electronic device comprising:
a main body (10); and
a movable touch module (12) disposed at the main body, the movable touch module (12) including:
a movable element (122) disposed at the main body and being movable relative to the main body on a plane, the movable element having a first containing area;
a touch unit (120) fastened to the movable element;
a plurality of elastic units (124) disposed at the main body and being against the periphery of the movable element;
a four-direction sensing element (126) fastened to the main body and located in the first containing area of the movable element; and
at least two rotation sensing elements (128) fastened to the main body and located in the first containing area of the movable element,
wherein when the movable element (122) moves along a direction on the plane, the movable element correspondingly triggers the four-direction sensing element (126) along the direction, and when the movable element (122) rotates on the plane, the movable element correspondingly triggers one of the rotation sensing elements (128).

10. The electronic device according to claim 9, wherein the main body (10) comprises a circuit board and a casing, the circuit board is disposed in the casing, the casing has an opening, the touch unit (120) is disposed at the opening, the movable element (122) is located between the touch unit and the circuit board, and the elastic units, the four-direction sensing element, and the rotation sensing elements are fastened to the circuit board.

11. The electronic device according to claim 9 or 10, wherein the movable touch module (12) further comprises two pressing switches fastened to the main body, and the touch unit (120) covers the pressing switches.

12. The electronic device according to one of the claims 9 to 11, wherein the movable touch module (12) further comprises a frame located between the touch unit and the movable element, the movable element and the elastic units are disposed in the frame, and the elastic units are against the movable element and inner walls of the frame.

13. The electronic device according to one of the claims 9 to 12, wherein the touch unit (120) comprises a touch pad and a bracket, the touch pad is fastened to the bracket, and the bracket is fastened to the movable element.

14. The electronic device according to one of the claims 9 to 13, wherein each of the elastic units (124) comprises at least one spring and a sliding block, one end of the sliding block is against the movable element, and the spring is sleeved on the other end of the sliding block.

15. The electronic device according to one of the claims 9 to 14, wherein the movable element (122) further has four movement triggering portions, the movement triggering portions are disposed in the first containing area and form a second containing area, and the four-direction sensing element is located in the second containing area.

16. The electronic device according to claim 15, wherein the movable element (122) further has two rotation triggering portions located out of the second containing area.

17. The electronic device according to one of the claims 9 to 16, wherein the electronic device is a notebook computer.
